# EUROPEAN PATENT APPLICATION

(11) **EP 4 482 163 A1**
(43) Date of publication of application: **25.12.2024**
(21) Application number: 22926974.1
(22) Date of filing: 15.02.2022
(51) Int. Cl.: H04N 23/60

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: YAMAKABE, Ryo, Tokyo 108-8001 (JP); SUGA, Akito, Tokyo 108-8001 (JP); OAMI, Ryoma, Tokyo 108-8001 (JP); AKASHI, Ryuichi, Tokyo 108-8001 (JP); TOIZUMI, Takahiro, Tokyo 108-8001 (JP); TSUKADA, Masato, Tokyo 108-8001 (JP); FUNAYAMA, Chisato, Tokyo 108-8001 (JP); SHOJI, Yuho, Tokyo 108-8001 (JP); SASAKI, Masato, Tokyo 108-8001 (JP); OGINO, Yuka, Tokyo 108-8001 (JP); YOSHIMI, Kosuke, Tokyo 108-8001 (JP)
(74) Representative: Betten & Resch
(86) International application number: PCT/JP2022/005916
(87) International publication number: WO 2023/157071

(57) **Abstract**

An information processing apparatus includes: a guide generation unit that generates guide information about capturing a target image on the basis of the target image; a guide output unit that outputs the guide information; and a guide evaluation unit that evaluates the guide information on the basis of the target image captured before and after an output of the guide information. According to the information processing apparatus, the guide information may be properly evaluated.

## Description

### Technical Field

This disclosure relates to technical fields of an information processing apparatus, an information processing method, and a recording medium.

### Background Art

A known apparatus of this type outputs guidance information for capturing an appropriate image. For example, Patent Literature 1 discloses that, when a good iris image is not acquired due to the fact that imaging processing is performed in direct sunlight, various messages are displayed on a display to encourage a user to make a predetermined action. Patent Literature 2 discloses that a cause of an imaging failure is identified and a guidance message corresponding to the cause is outputted.

### Citation List

### Patent Literature

Patent Literature 1: JP2018-124773A
Patent Literature 2: JP2005-071009A

### Summary

### Technical Problem

This disclosure aims to improve the techniques/technologies disclosed in Citation List.

### Solution to Problem

An information processing apparatus according to an example aspect of this disclosure includes: a guide generation unit that generates guide information about capturing a target image on the basis of the target image; a guide output unit that outputs the guide information; and a guide evaluation unit that evaluates the guide information on the basis of the target image captured before and after an output of the guide information.

An information processing method according to an example aspect of this disclosure includes: generating guide information about capturing a target image on the basis of the target image; outputting the guide information; and evaluating the guide information on the basis of the target image captured before and after an output of the guide information.

A recording medium according to an example aspect of this disclosure is a recording medium on which a computer program that allows at least one computer to execute an information processing method is recorded, the information processing method including: generating guide information about capturing a target image on the basis of the target image; outputting the guide information; and evaluating the guide information on the basis of the target image captured before and after an output of the guide information.

### Brief Description of Drawings

[FIG. 1] FIG. 1 is a block diagram illustrating a hardware configuration of an information processing apparatus according to a first example embodiment.
[FIG. 2] FIG. 2 is a block diagram illustrating a functional configuration of the information processing apparatus according to the first example embodiment.
[FIG. 3] FIG. 3 is a flowchart illustrating a flow of operation of the information processing apparatus according to the first example embodiment.
[FIG. 4] FIG. 4 is a block diagram illustrating a functional configuration of an information processing apparatus according to a second example embodiment.
[FIG. 5] FIG. 5 is a flowchart illustrating a flow of operation of the information processing apparatus according to the second example embodiment.
[FIG. 6] FIG. 6 is a block diagram illustrating a functional configuration of an information processing apparatus according to a third example embodiment.
[FIG. 7] FIG. 7 is a flowchart illustrating a flow of operation of the information processing apparatus according to the third example embodiment.
[FIG. 8] FIG. 8 is a block diagram illustrating a functional configuration of an information processing apparatus according to a fourth example embodiment.
[FIG. 9] FIG. 9 is a flowchart illustrating a flow of operation of the information processing apparatus according to the fourth example embodiment.
[FIG. 10] FIG. 10 is a block diagram illustrating a functional configuration of an information processing apparatus according to a fifth example embodiment.
[FIG. 11] FIG. 11 is a flowchart illustrating a flow of operation of the information processing apparatus according to the fifth example embodiment.
[FIG. 12] FIG. 12 is a histogram illustrating an example of a learning operation of an information processing apparatus according to a sixth example embodiment.
[FIG. 13] FIG. 13 is a table illustrating an example of an evaluation operation of an information processing apparatus according to a seventh example embodiment is illustrated.
[FIG. 14] FIG. 14 is a table illustrating an example of the evaluation operation of an information processing apparatus according to an eighth example embodiment is illustrated.
[FIG. 15] FIG. 15 is a flowchart illustrating a flow of the evaluation operation by an information processing apparatus according to a ninth example embodiment.
[FIG. 16] FIG. 16 is a flowchart illustrating a flow of the evaluation operation by an information processing apparatus according to a tenth example embodiment.

### Description of Example Embodiments

Hereinafter, an information processing apparatus, an information processing method, and a recording medium according to example embodiments will be described with reference to the drawings.

### <First Example Embodiment>

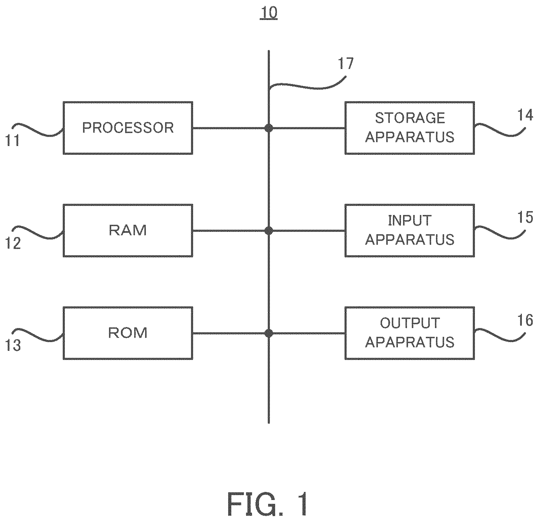

An information processing apparatus according to a first example embodiment will be described with reference to FIG. 1 to FIG. 3.

### (Hardware Configuration)

First, with reference to FIG. 1, a hardware configuration of the information processing apparatus according to the first example embodiment will be described. FIG. 1 is a block diagram illustrating the hardware configuration of the information processing apparatus according to the first example embodiment.

As illustrated in FIG. 1, an information processing apparatus 10 according to the first example embodiment includes a processor 11, a RAM (Random Access Memory) 12, a ROM (Read Only Memory) 13, and a storage apparatus 14. The information processing apparatus 10 may further include an input apparatus 15 and an output apparatus 16. The processor 11, the RAM 12, the ROM 13, the storage apparatus 14, the input apparatus 15, and the output apparatus 16 are connected through a data bus 17.

The processor 11 reads a computer program. For example, the processor 11 is configured to read a computer program stored by at least one of the RAM 12, the ROM 13 and the storage apparatus 14. Alternatively, the processor 11 may read a computer program stored in a computer-readable recording medium, by using a not-illustrated recording medium reading apparatus. The processor 11 may acquire (i.e., may read) a computer program from a not-illustrated apparatus disposed outside the information processing apparatus 10, through a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for generating and evaluating guide information is realized or implemented in the processor 11. In this manner, the processor 11 may function as a controller for executing each control in the information processing apparatus 10.

The processor 11 may be configured as, for example, a CPU (Central Processing Unit), a GPU (Graphics Processing Unit), a FPGA (Field-Programmable Gate Array), a DSP (Demand-Side Platform), or an ASIC (Application Specific Integrated Circuit). The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may also be used instead of the RAM 12.

The ROM 13 stores the computer program to be executed by the processor 11. The ROM 13 may otherwise store fixed data. The ROM 13 may be, for example, a P-ROM (Programmable Read Only Memory) or an EPROM (Erasable Read Only Memory). Furthermore, another type of non-volatile memory may also be used instead of the ROM 13.

The storage apparatus 14 stores data that are stored by the information processing apparatus 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing apparatus 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing apparatus 10 to the outside. For example, the output apparatus 16 may be a display apparatus (e.g., a display) that is configured to display the information about the information processing apparatus 10. The output apparatus 16 may be a speaker or the like that is configured to audio-output the information about the information processing apparatus 10. The output apparatus 16 may be configured as a portable terminal such as a smartphone and a tablet. The output apparatus 16 may be an apparatus that outputs information in a form other than an image. For example, the output apparatus 16 may be a speaker that audio-outputs the information about the information processing apparatus 10.

Although FIG. 1 illustrates an example of the information processing apparatus 10 including a plurality of apparatuses, all or a part of the functions may be realized or implemented as a single apparatus. In such a case, the information processing apparatus 10 may include, for example, only the processor 11, the RAM 12, and the ROM 13. The other components (i.e., the storage apparatus 14, the input apparatus 15, and the output apparatus 16) may be provided in an external apparatus connected to the information processing apparatus 10, for example. In addition, in the information processing apparatus 10, a part of an arithmetic function may be realized by an external apparatus (e.g., an external server or cloud, etc.).

### (Functional Configuration)

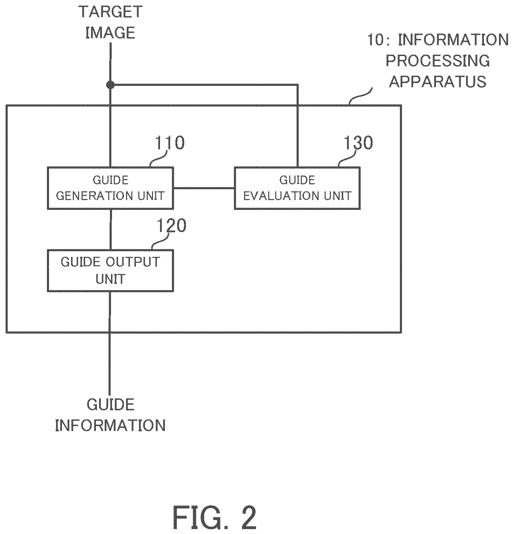

Next, with reference to FIG. 2, a functional configuration of the information processing apparatus 10 according to the first example embodiment will be described. FIG. 2 is a block diagram illustrating the functional configuration of the information processing apparatus according to the first example embodiment.

The information processing apparatus 10 according to the first example embodiment is configured to output guide information about imaging when capturing a target image (i.e., an image including a target). The type of the target image is not particularly limited, but may be, for example, an image used for biometric authentication. More specifically, the target image may be an iris image used for iris authentication, or a face image used for face authentication. The target image is not limited to a still image, and may be, for example, a video.

As illustrated in FIG. 2, the information processing apparatus 10 according to the first example embodiment includes, as components for realizing the functions thereof, a guide generation unit 110, a guide output unit 120, and a guide evaluation unit 130. Each of the guide generation unit 110, the guide output unit 120, and the guide evaluation unit 130 may be a processing block realized or implemented by the processor 11 (see FIG. 1), for example.

The guide generation unit 110 is configured to generate guide information about imaging of a target image on the basis of the target image. The guide information may be generated as information for capturing a more appropriate target image. For example, the guide information may be information including content of an instruction to a target to be imaged. Specifically, the guide information may be information for encouraging the target to make a particular action. Alternatively, the guide information may be information including control of control of a machine. Specifically, the guide information may be information for changing settings of a camera that captures the target image or a lighting apparatus.

The guide output unit 120 is configured to output the guide information generated by the guide generation unit 110. The guide output unit 120 may output the guide information to a user, or may output it to a machine. An output aspect of the guide information is not particularly limited, but the guide output unit 120 may output the guide information by using the output apparatus 16 (see FIG. 1), for example. More specifically, the guide output unit 120 may display the guide information on a display. Alternatively, the guide output unit 120 may audio-output the guide information by using a speaker or the like. Alternatively, the guide output unit 120 may output the guide information as information for controlling operation of an external apparatus. In this instance, a control unit of the external apparatus may receive the guide information, and may perform an operation based on the received guide information.

The guide evaluation unit 130 is configured to evaluate the guide information outputted by the guide output unit 120. For example, the guide evaluation unit 130 may evaluate whether the guide information is appropriate or inappropriate. The guide evaluation unit 130 may evaluate the guide information by calculating an evaluation score indicating a degree of appropriateness of the guide information. The guide evaluation unit 130 evaluates the guide information on the basis of a target imaged before and after the output of the guide information. A specific evaluation method by the guide evaluation unit 130 will be described in detail in another example embodiment later.

### (Flow of Operation)

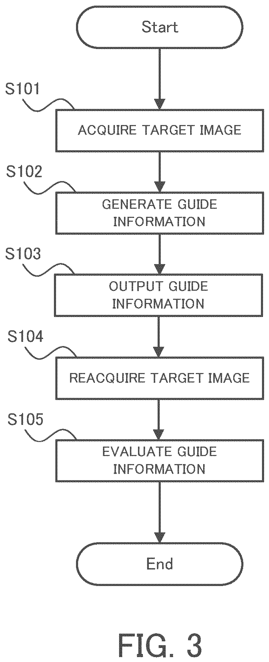

Next, with reference to FIG. 3, a flow of operation of the information processing apparatus 10 according to the first example embodiment (specifically, a flow before the guide information is evaluated) will be described. FIG. 3 is a flowchart illustrating the flow of the operation of the information processing apparatus according to the first example embodiment.

As illustrated in FIG. 3, when the operation of the information processing apparatus 10 according to the first example embodiment is started, first, the guide generation unit 110 and the guide evaluation unit 130 acquire the target image (step S101). The guide generation unit 110 and the guide evaluation unit 130 may acquire the target image at the same time, or acquire the target image at different timing.

Subsequently, the guide generation unit 110 generates the guide information on the basis of the acquired target image (step S102). Then, the guide output unit 120 outputs the guide information generated by the guide generation unit 110 (step S103).

Subsequently, the guide evaluation unit 130 reacquires the target image (step S104). Then, the guide evaluation unit 130 evaluates the guide information outputted by the guide output unit 120 on the basis of the target image captured before the output of the guide information (i.e., the target image acquired in the step S101) and the target image captured after the output of the guide information (i.e., the target image acquired in the step S103) (step S105).

The guide evaluation unit 130 may output an evaluation result of the guide information. The application of the outputted evaluation result is not particularly limited, but it may be used for the generation of the guide information after a next time, for example. Such a configuration will be described in detail in another example embodiment later.

### (Technical Effect)

Next, a technical effect obtained by the information processing apparatus 10 according to the first example embodiment will be described.

As described in FIG. 1 to FIG. 3, in the information processing apparatus 10 according to the first example embodiment, the guide information generated on the basis of the target image is evaluated on the basis of the target image before and after the output of the guide information. In this way, it is possible to evaluate whether the guide information is appropriate (e.g., whether it is useful to improve quality of the target image). Therefore, by using the evaluation result, it is possible to generate more appropriate guide information. In addition, by generating the appropriate guide information, the target image suitable for the application may be acquired. For example, when the target image is used for authentication processing such as biometric authentication, the target image suitable for authentication may be acquired.

### <Second Example Embodiment>

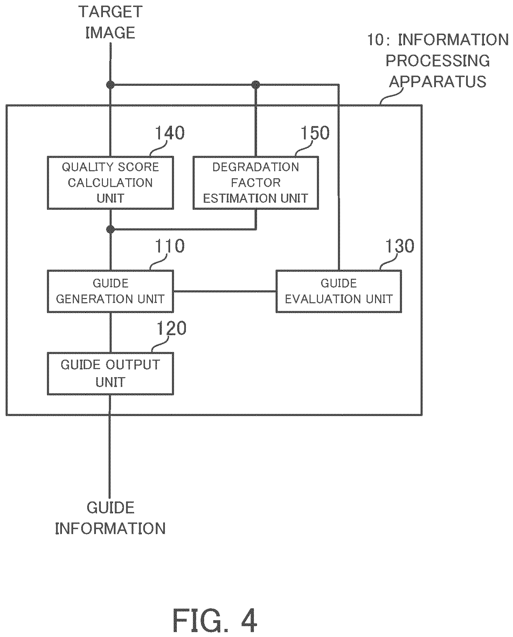

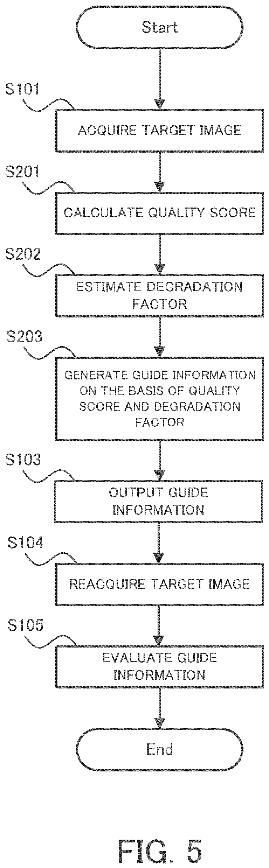

The information processing apparatus 10 according to a second example embodiment will be described with reference to FIG. 4 and FIG. 5. The second example embodiment is partially different from the first example embodiment only in the configuration and operation, and may be the same as the first example embodiment in the other parts. For this reason, a part that is different from the first example embodiment will be described in detail below, and a description of the other overlapping parts will be omitted as appropriate.

### (Functional Configuration)

First, with reference to FIG. 4, a functional configuration of the information processing apparatus 10 according to the second example embodiment will be described. FIG. 4 is a block diagram illustrating the functional configuration of the information processing apparatus according to the second example embodiment. In FIG. 4, the same components as those illustrated in FIG. 2 carry the same reference numerals.

As illustrated in FIG. 4, the information processing apparatus 10 according to the second example embodiment includes, as components for realizing the functions thereof, the guide generation unit 110, the guide output unit 120, the guide evaluation unit 130, a quality score calculation unit 140, and a degradation factor estimation unit 150. That is, the information processing apparatus 10 according to the second example embodiment further includes the quality score calculation unit 140 and the degradation factor estimation unit 150, in addition to the configuration in the first example embodiment (see FIG. 2). Each of the quality score calculation unit 140 and the degradation factor estimation unit 150 may be a processing block realized or implemented by the processor 11 (see FIG. 1), for example.

The quality score calculation unit 140 is configured to calculate a quality score indicating the quality of the target image. The quality score may be calculated higher as the quality of the target image is higher, for example. The "quality" here may be determined not only by simple image quality, but also by a standard corresponding to the application of the target image, for example. Specifically, as the image is more suitable for the application of the target image (e.g., authentication processing), the quality score may be calculated higher. A method of calculating the quality score properly may employ existing techniques/technologies as appropriate, and therefore, a detailed description thereof will be omitted here. The quality score calculated by the quality score calculation unit 140 is configurated to be outputted to the guide generation unit 110.

The degradation factor estimation unit 150 is configured to estimate a degradation factor of the target image. The "degradation factor" here indicates a cause of degradation of the target image. Therefore, when the quality of the target image is not degraded, the degradation factor estimation unit 150 may not estimate the degradation factor. In that case, the degradation factor estimation unit 150 may output an indication that "there is no degradation factor". A method of estimating the degradation factor may employ existing techniques/technologies as appropriate, and therefore, a detailed description thereof will be omitted here. The degradation factor estimated by the degradation factor is configurated to be outputted to the guide generation unit 110.

There is no particular limitation on the type of the degradation factor, but a degradation factor of an iris image used for iris authentication may be classified into blur degradation, hidden degradation, and others, for example. More specifically, the blur degradation may include out-of-focus, motion blur, or the like. The hidden degradation may include narrow eyes, eyeglass reflection occlusion, iris internal reflection occlusion, eyeglass frame occlusion, out frame, pupil size change, eyelash occlusion, front hair occlusion, or the like. Others may include insufficient resolution, oblique light, contact lenses, off angles, sensor noise, or the like.

### (Flow of Operation)

Next, with reference to FIG. 5, a flow of operation of the information processing apparatus 10 according to the second example embodiment will be described. FIG. 5 is a flowchart illustrating the flow of the operation of the information processing apparatus according to the second example embodiment. In FIG. 5, the same steps as those illustrated in FIG. 3 carry the same reference numerals.

As illustrated in FIG. 5, when the operation of the information processing apparatus 10 according to the second example embodiment is started, first, the quality score calculation unit 140, the degradation factor estimation unit 150, and the guide evaluation unit 130 acquire the target image (step S101). The quality score calculation unit 140, the degradation factor estimation unit 150, and the guide evaluation unit 130 may acquire the target image at the same time, or acquire the target image at different timing.

Subsequently, the quality score calculation unit 140 calculates the quality score of the acquired target image (step S201). Furthermore, the degradation factor estimation unit 150 estimates the degradation factor of the acquired target image (step S202). The steps S201 and S202 may be performed in reverse order, or may be performed in parallel simultaneously. Each of the quality score calculated by the quality score calculation unit 140 and the degradation factor estimated by the degradation factor estimation unit 150 is outputted to the guide generation unit 110.

Subsequently, the guide generation unit 110 generates the guide information on the basis of at least one of the quality score calculated by the quality score calculation unit 140 and the degradation factor estimated by the degradation factor estimation unit 150 (step S203). That is, the guide generation unit 110 may generate the guide information by using only the quality score. Alternatively, the guide generation unit 110 may generate the guide information by using only the degradation factor. Alternatively, the guide generation unit 110 may generate the guide information by using both the quality score and the degradation factor.

For example, when the quality score of the target image is low, the guide generation unit 110 may generate the guide information for changing a state (e.g., a position or a state of the target, a camera parameter, intensity or direction of lighting, etc.) at the time of imaging. The guide generation unit 110 may generate the guide information for eliminating the degradation factor. Specifically, when target image is degraded due to an inappropriate position of the target, the guide information for encouraging the target to move to an appropriate position, may be generated. When the guide information is generated, the guide output unit 120 outputs the generated guide information (step S103).

Subsequently, the guide evaluation unit 130 reacquires the target image (step S104). Then, the guide evaluation unit 130 evaluates the guide information outputted by the guide output unit 120 on the basis of the target image captured before the output of the guide information (i.e., the target image acquired in the step S101) and the target image captured after the output of the guide information (i.e., the target image acquired in the step S103) (step S105).

### (Technical Effect)

Next, a technical effect obtained by the information processing apparatus 10 according to the second example embodiment will be described.

As described in FIG. 4 and FIG. 5, in the information processing apparatus 10 according to the second example embodiment, the guide information is generated on the basis of at least one of the quality score and the degradation factor. In this way, it is possible to generate the appropriate guide information in view of the quality and the degradation factors of the target image.

### <Third Example Embodiment>

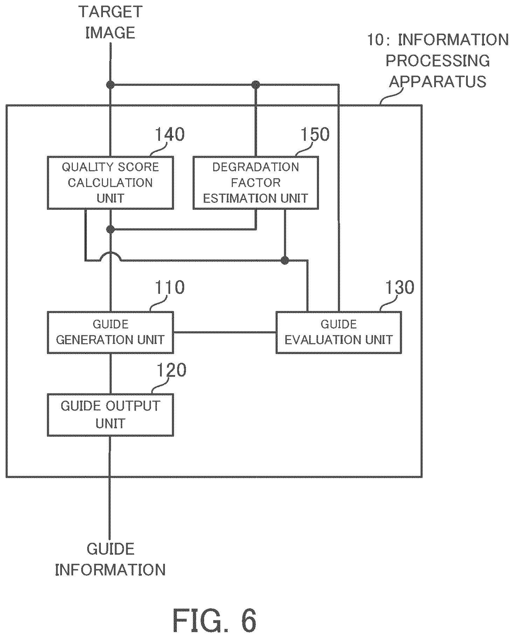

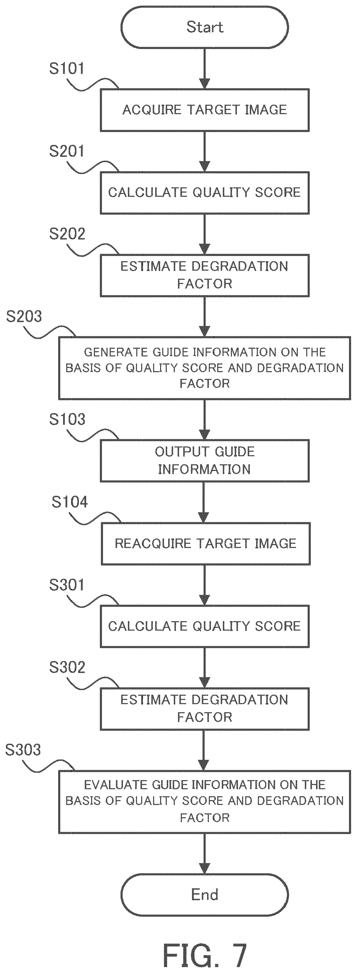

The information processing apparatus 10 according to a third example embodiment will be described with reference to FIG. 6 and FIG. 7. The third example embodiment is partially different from the second example embodiment only in the configuration and operation, and may be the same as the first and second example embodiments in the other parts. For this reason, a part that is different from each of the example embodiments described above will be described in detail below, and a description of the other overlapping parts will be omitted as appropriate.

### (Functional Configuration)

First, with reference to FIG. 6, a functional configuration of the information processing apparatus 10 according to the third example embodiment will be described. FIG. 6 is a block diagram illustrating the functional configuration of the information processing apparatus according to the third example embodiment. In FIG. 6, the same components as those illustrated in FIG. 4 carry the same reference numerals.

As illustrated in FIG. 6, the information processing apparatus 10 according to the second example embodiment includes, as components for realizing the functions thereof, the guide generation unit 110, the guide output unit 120, the guide evaluation unit 130, the quality score calculation unit 140, and the degradation factor estimation unit 150. Especially in the information processing apparatus 10 according to the third example embodiment, the quality score calculated by the quality score calculation unit 140 and the degradation factor estimated by the degradation factor estimation unit 150 are configured to be inputted to the guide evaluation unit 130. One of the quality score and the degradation factor may be inputted to the guide evaluation unit 130. The guide evaluation unit 130 according to the third example embodiment is configured to evaluate the guide information on the basis of a transition of at least one of the quality score calculated by the quality score calculation unit 140 and the degradation factor estimated by the degradation factor estimation unit 150.

The transition of the quality score may be, for example, information indicating whether the quality score goes up or down, or may be information indicating no change in the quality score (i.e., a current state is maintained). Furthermore, the transition of the quality score may be information indicating specifically to what extent the quality score is changed (i.e., a change amount). In addition, an original degree of the quality score may be considered for the transition of the quality score. For example, comparing when the quality score before the output of the guide information is 10 and the quality score after the output is 20 with when the quality score before the output of the guide information is 80 and the quality score after the output is 90, different evaluations may be made even though the change amount is 10 in the both cases.

The transition of the degradation factor may be, for example, information indicating that the degradation factor listed before the output of the guide information is eliminated, or information indicating that a new degradation factor is listed after the output of the guide information. The transition of the degradation factor may be, for example, information indicating how a likelihood of the degradation factor (i.e., a value indicating the likelihood of the degradation factor) is changed. The transition of the degradation factor may include information about the transition of a plurality of types of degradation factors.

### (Flow of Operation)

Next, with reference to FIG. 7, a flow of operation of the information processing apparatus 10 according to the third example embodiment will be described. FIG. 7 is a flowchart illustrating the flow of the operation of the information processing apparatus according to the third example embodiment. In FIG. 7, the same steps as those illustrated in FIG. 5 carry the same reference numerals.

As illustrated in FIG. 7, when the operation of the information processing apparatus 10 according to the third example embodiment is started, first, the quality score calculation unit 140, the degradation factor estimation unit 150, and the guide evaluation unit 130 acquire the target image (step S101). Subsequently, the quality score calculation unit 140 calculates the quality score of the acquired target image (step S201). Furthermore, the degradation factor estimation unit 150 estimates the degradation factor of the acquired target image (step S202). Each of the quality score calculated by the quality score calculation unit 140 and the degradation factor estimated by the degradation factor estimation unit 150 is outputted to the guide generation unit 110.

Subsequently, the guide generation unit 110 generates the guide information on the basis of at least one of the quality score calculated by the quality score calculation unit 140 and the degradation factor estimated by the degradation factor estimation unit 150 (step S203). When the guide information is generated, the guide output unit 120 outputs the generated guide information (step S103).

Subsequently, the quality score calculation unit 140, the degradation factor estimation unit 150, and the guide evaluation unit 130 reacquire the target image (step S104). The quality score calculation unit 140 calculates the quality score of the reacquired target image (step S301). Furthermore, the degradation factor estimation unit 150 estimates the degradation factor of the reacquired target image (step S302).

Subsequently, the guide evaluation unit 130 evaluates the guide information outputted by the guide output unit 120, on the basis of at least one of the transition of the quality score and the degradation factor before and after the output of the guide information (step S105).

For example, when the quality score goes up after the output of the guide information, the guide evaluation unit 130 may evaluate that the guide information is appropriate. On the other hand, when the quality score goes down (or there is no change) after the output of the guide information, the guide evaluation unit 130 may evaluate that the guide information is not appropriate. Alternatively, when the degradation factor is eliminated after the output of the guide information, the guide evaluation unit 130 may evaluate that the guide information is appropriate. On the other hand, when the degradation factor is not solved after the output of the guide information, the guide evaluation unit 130 may evaluate that the guide information is not appropriate.

### (Technical Effect)

Next, a technical effect obtained by the information processing apparatus 10 according to the third example embodiment will be described.

As described in FIG. 6 and FIG. 7, in the information processing apparatus 10 according to the third example embodiment, the guide information is evaluated on the basis of the transition of at least one of the quality score and the degradation factor of the target image. In this way, since the evaluation is made in view of the quality and the degradation factor of the target image, it is possible evaluate the guide information, more properly.

### <Fourth Example Embodiment>

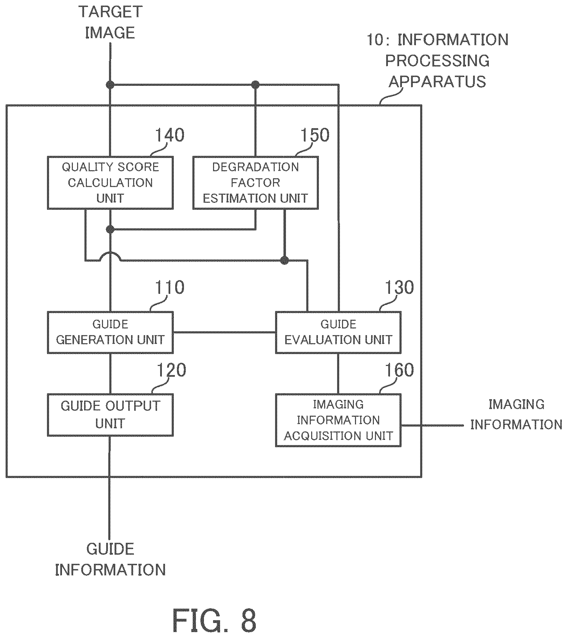

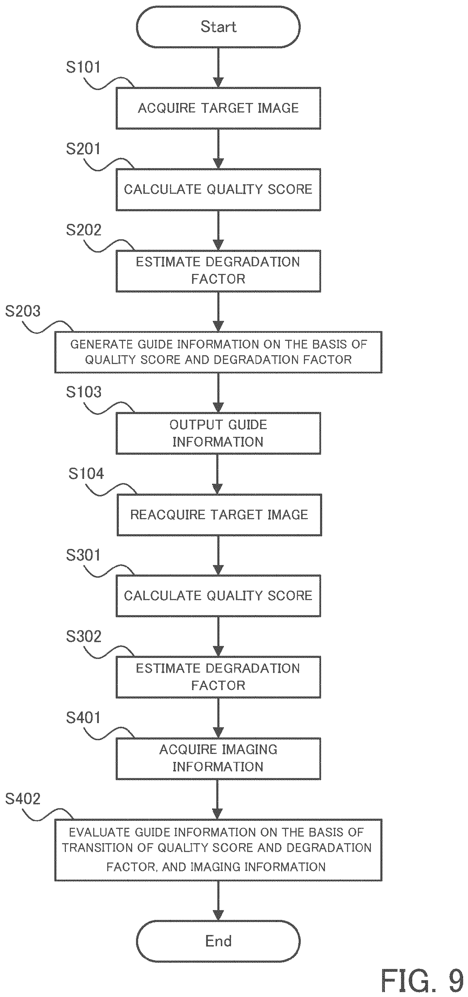

The information processing apparatus 10 according to a fourth example embodiment will be described with reference to FIG. 8 and FIG. 9. The fourth example embodiment is partially different from the third example embodiment only in the configuration and operation, and may be the same as the first to third example embodiments in the other parts. For this reason, a part that is different from each of the example embodiments described above will be described in detail below, and a description of the other overlapping parts will be omitted as appropriate.

### (Functional Configuration)

First, with reference to FIG. 8, a functional configuration of the information processing apparatus 10 according to the fourth example embodiment will be described. FIG. 8 is a block diagram illustrating the functional configuration of the information processing apparatus according to the fourth example embodiment. In FIG. 8, the same components as those illustrated in FIG. 6 carry the same reference numerals.

As illustrated in FIG. 8, the information processing apparatus 10 according to the fourth example embodiment includes, as components for realizing the functions thereof, the guide generation unit 110, the guide output unit 120, the guide evaluation unit 130, the quality score calculation unit 140, the degradation factor estimation unit 150, and an imaging information acquisition unit 160. That is, the information processing apparatus 10 according to the fourth example embodiment further includes the imaging information acquisition unit 160 in addition to the configuration in the third example embodiment (see FIG. 6). The imaging information acquisition unit 160 may be a processing block realized or implemented by the processor 11 (see FIG. 1), for example.

The imaging information acquisition unit 160 is configured to acquire imaging information about the target image. The imaging information here is information including at least one of an imaging environment, an imaging date and time, an imaging target, and an imaging place of the target image. Information about the imaging environment may include information about brightness of the imaging place or the like, for example. Information about the imaging date and time may include information not only about a date and time zone, but also about seasons or the like, for example. Information about the imaging target may include information about a position and size of imaging, a direction of the target, an opening degree of eyes, and wearing items (such as glasses and masks, etc.). Information about the imaging place may include, for example, information about latitude, longitude, and address of the imaging place. The imaging information acquired by the imaging information acquisition unit 160 is configured to be outputted to the guide evaluation unit 130.

### (Flow of Operation)

Next, with reference to FIG. 9, a flow of operation of the information processing apparatus 10 according to the fourth example embodiment will be described. FIG. 9 is a flowchart illustrating the flow of the operation of the information processing apparatus according to the fourth example embodiment. In FIG. 9, the same steps as those illustrated in FIG. 7 carry the same reference numerals.

As illustrated in FIG. 9, when the operation of the information processing apparatus 10 according to the fourth example embodiment is started, first, the quality score calculation unit 140, the degradation factor estimation unit 150, and the guide evaluation unit 130 acquire the target image (step S101). Subsequently, the quality score calculation unit 140 calculates the quality score of the acquired target image (step S201). Furthermore, the degradation factor estimation unit 150 estimates the degradation factor of the acquired target image (step S202). Each of the quality score calculated by the quality score calculation unit 140 and the degradation factor estimated by the degradation factor estimation unit 150 is outputted to the guide generation unit 110.

Subsequently, the guide generation unit 110 generates the guide information on the basis of at least one of the quality score calculated by the quality score calculation unit 140 and the degradation factor estimated by the degradation factor estimation unit 150 (step S203). When the guide information is generated, the guide output unit 120 outputs the generated guide information (step S103).

Subsequently, the quality score calculation unit 140, the degradation factor estimation unit 150, and the guide evaluation unit 130 reacquire the target image (step S104). The quality score calculation unit 140 calculates the quality score of the reacquired target image (step S301). Furthermore, the degradation factor estimation unit 150 estimates the degradation factor of the reacquired target image (step S302).

Subsequently, the imaging information acquisition unit 160 acquires the imaging information (step S401). Here, the imaging information is acquired after the reacquisition of the target image (i.e., after the step S104), but information of the imaging information that does not change before and after the output of the guide information (i.e., the imaging information that is not influenced by the guide information) may be acquired before that.

Subsequently, the guide evaluation unit 130 evaluates the guide information outputted by the guide output unit 120, on the basis of the transition of at least one of the quality score and the degradation factor before and after the output of the guide information, and the imaging information acquired by the imaging information acquisition unit 160 (step S402). That is, in the fourth example embodiment, in addition to the transition of at least one of the quality score and the degradation factor used in the third example embodiment (see FIG. 7), the guide information is evaluated by using the imaging information.

### (Technical Effect)

Next, a technical effect obtained by the information processing apparatus 10 according to the fourth example embodiment will be described.

As described in FIG. 8 and FIG. 9, in the information processing apparatus 10 according to the fourth example embodiment, the guide information is evaluated by using the imaging information. In this way, since the information about capturing the target image is taken into account, it is possible to evaluate the guide information, more properly.

### <Fifth Example Embodiment>

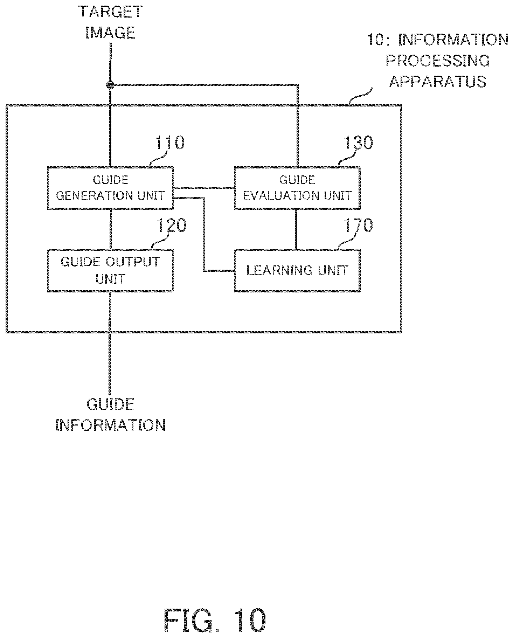

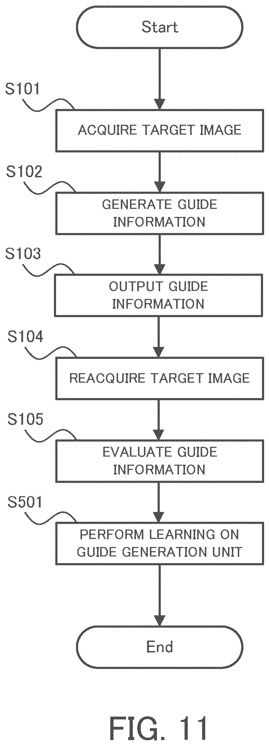

The information processing apparatus 10 according to a fifth example embodiment will be described with reference to FIG. 10 and FIG. 11. The fifth example embodiment is partially different from the first to fourth example embodiments only in the configuration and operation, and may be the same as the first to fourth example embodiments in the other parts. For this reason, a part that is different from each of the example embodiments described above will be described in detail below, and a description of the other overlapping parts will be omitted as appropriate.

### (Functional Configuration)

First, with reference to FIG. 10, a functional configuration of the information processing apparatus 10 according to the fifth example embodiment will be described. FIG. 10 is a block diagram illustrating the functional configuration of the information processing apparatus according to the fifth example embodiment. In FIG. 10, the same components as those illustrated in FIG. 2 carry the same reference numerals.

As illustrated in FIG. 10, the information processing apparatus 10 according to the fifth example embodiment includes, as components for realizing the functions thereof, the guide generation unit 110, the guide output unit 120, the guide evaluation unit 130, and a learning unit 170. That is, the information processing apparatus 10 according to the fifth example embodiment further includes the learning unit 170 in addition to the configuration in the first example embodiment (see FIG. 2). The learning unit 170 may be a processing block realized or implemented by the processor 11 (see FIG. 1), for example. The information processing apparatus 10 according to the fifth example embodiment may include the quality score calculation unit 140, the degradation factor estimation unit 150, and the imaging information acquisition unit 160, as in the second to fourth example embodiments already described.

The learning unit 170 is configured to perform learning on the guide generating unit 110 on the basis of the evaluation result of the guide evaluation unit 130. A learning method by the learning unit 170 is not particularly limited. For example, the learning unit 170 may optimize a parameter of a model used by the guide generation unit 110 (i.e., a model learned/trained to generate the guide information) on the basis of the evaluation result of the guide evaluation unit 130. The learning unit 170 may perform the learning on the guide generation unit 110 so as to generate the guide information with a higher evaluation. For example, the learning unit 170 may perform the learning on the guide generating unit 110 before the operation of the information processing apparatus 10 (e.g., it may perform the learning in advance, such as in a calibration mode using test data). Alternatively, the learning unit 170 may perform the learning on the guide generation unit 110 in operation of the information processing apparatus 10 (e.g., while the guide information is outputted to an actual user).

The guide generation unit 110 according to the present example embodiment is configured to generate the guide information by using a learning result by the learning unit 170. The guide generation unit 110 may generate new guide information at each time when the learning is performed by the learning unit 170.

### (Flow of Operation)

Referring now to FIG. 11, a flow of operation of the information processing apparatus 10 according to the fifth example embodiment will be described. FIG. 11 is a flowchart illustrating the flow of the operation of the information processing apparatus according to the fifth example embodiment. In FIG. 11, the same steps as those illustrated in FIG. 3 carry the same reference numerals.

As illustrated in FIG. 11, when the operation of the information processing apparatus 10 according to the fifth example embodiment is started, first, the guide generation unit 110 and the guide evaluation unit 130 acquire the target image (step S101). Subsequently, the guide generation unit 110 generates the guide information on the basis of the acquired target image (step S102). Then, the guide output unit 120 outputs the guide information generated by the guide generation unit 110 (step S103).

Subsequently, the guide evaluation unit 130 reacquires the target image (step S104). Then, the guide evaluation unit 130 evaluates the guide information outputted by the guide output unit 120 on the basis of the target image captured before the output of the guide information (i.e., the target image acquired in the step S101) and the target image captured after the output of the guide information (i.e., the target image acquired in the step S103) (step S105).

Subsequently, the learning unit 170 performs the learning on the guide generation unit 110 by using the evaluation result of the guide evaluation unit 130 (step 5106). The learning by the learning unit 170 may be performed at each time when a new evaluation result is outputted from the guide evaluation unit 130. A more specific operation in the learning will be described in detail in another example embodiment later.

### (Technical Effect)

Next, a technical effect obtained by the information processing apparatus 10 according to the fifth example embodiment will be described.

As described in FIG. 10 and FIG.11, in the information processing apparatus 10 according to the fifth example embodiment, the learning is performed on the guide generation unit 110 on the basis of the evaluation result of the guide information. In this way, since the evaluation result is fed back to the generation of the guide information, it is possible to generate the more appropriate guide information from the target image.

### <Sixth Example Embodiment>

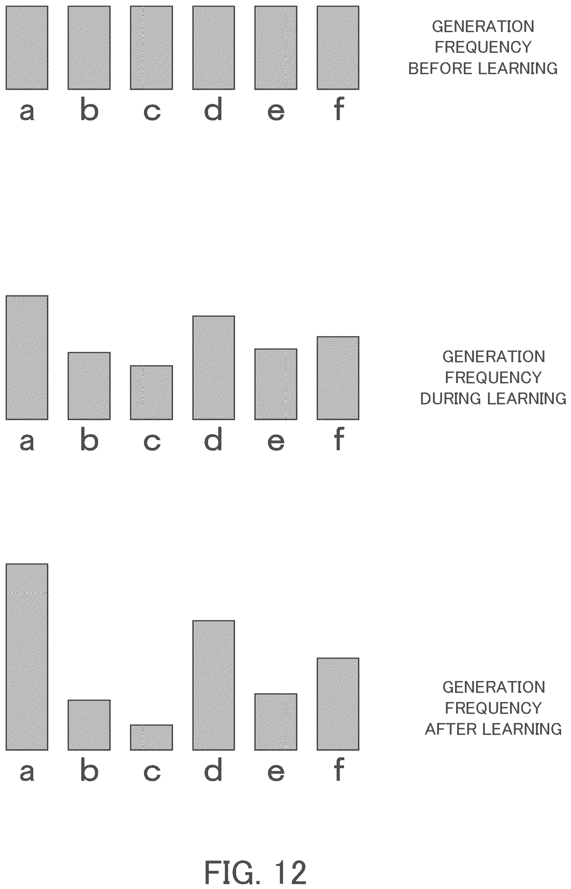

The information processing apparatus 10 according to a sixth example embodiment will be described with reference to FIG. 12. The sixth example embodiment describes a specific example of the learning operation in the fifth example embodiment, and may be the same as the first to fifth example embodiments in the other parts. For this reason, a part that is different from each of the example embodiments described above will be described in detail below, and a description of the other overlapping parts will be omitted as appropriate.

### (Generation Frequency of Guide Information)

First, a generation frequency of the guide information in the guide generation unit 110 will be described with reference to FIG. 12. FIG. 12 is a histogram illustrating an example of the learning operation of the information processing apparatus according to the sixth example embodiment.

As illustrated in FIG. 12, it is assumed that there are a plurality of candidates for the guide information generated by the guide generation unit 110 (see a, b, c, d, e, f in the figure). Each of these candidates is the same type of guide information, and may be generated under the same condition.

For example, when the target is desired to approach a camera, various possible candidates of the guide information are: displaying different messages such as "Please approach the camera", "Please go forward", "Please move a step forward", and "Please move by 50 cm in the direction of travel"; displaying an arrow; applying a light on a destination; or the like. When the target is desired to open the eyes, possible candidates of the guide information are: displaying a message such as "Please have your eyes wide open" and "Please open your eyes wide"; superimposing and displaying an appropriate eyelid position on a facial image displayed on a monitor; or displaying an image with the eyes wide open on the monitor. In addition, possible candidates of the guide information about the wearing items are: displaying a message such as "Please remove the eyeglasses/mask", "Please raise the eyeglasses/mask", and "Please lower the eyeglasses/mask"; or instructing a specific removal method or an angle when moving the items. In addition, possible candidates of the guide information for changing the direction of the face, are: displaying a message such as "Please look here", "Please turn your face", and "Please turn your body"; guiding a line of sight or the face with a marker on the monitor; displaying a face contour at an appropriate position on the monitor; or instructing specific parameters. Although the above exemplary guide information is outputted to the target, there are a plurality of possible candidates of the guide information generated in the same manner even when the guide information is outputted to a machine.

The guide generation unit 110 according to the present example embodiment is configured to change the generation frequency of the plurality of candidates, by using the learning result by the learning unit 170 (see FIG. 10). For example, the guide generation unit 110 may generate the guide information with a good evaluation result by the guide evaluation unit 130 at relatively high frequency, and may generate the guide information with a bad evaluation result at relatively low frequency.

The histogram illustrated in FIG. 12 illustrates a distribution of the generation frequency of each candidate as listed in the examples above. For example, before the learning of the guide generation unit 110, the respective generation frequencies of the candidates match with each other. In this case, the candidates are randomly generated without bias. In a middle stage of the learning, however, the frequency of each candidate begins to vary. For example, in the example illustrated in the figure, the frequency of a and d increases, while the frequency of b and c decreases. This is because the following result is learned; namely, the guide information for a and d is evaluated to be appropriate, while the guide information for b and c is not appropriate. That is, the learning unit 170 according to the sixth example embodiment performs the learning on the guide generating unit 110 so as to increase accuracy of the guide information with a good evaluation result (in other words, to reduce the accuracy of the guide information with a bad evaluation result). As a result, after the learning of the learning generation unit 110, there is a large difference in the generation frequency among the candidates a to f.

### (Technical Effect)

Next, a technical effect obtained by the information processing apparatus 10 according to the sixth example embodiment will be described.

As illustrated in FIG. 12, in the information processing apparatus 10 according to the sixth example embodiment, the generation frequency of the guide information is changed by the learning. In this way, since the generation frequency of the appropriate guide information increases, it is possible to proceed with the learning, more properly.

### <Seventh Example Embodiment>

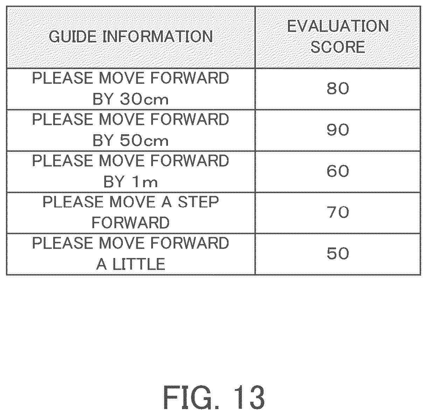

The information processing apparatus 10 according to a seventh example embodiment will be described with reference to FIG. 13. The seventh example embodiment is partially different from the first to sixth example embodiments only in the operation, and may be the same as the first to sixth example embodiments in the other parts. For this reason, a part that is different from each of the example embodiments described above will be described in detail below, and a description of the other overlapping parts will be omitted as appropriate.

### (Method of Evaluating Guide Information with Different Parameters)

First, with reference to FIG. 13, the guide information generated by the information processing apparatus 10 according to the seventh example embodiment and an evaluation method thereof will be described. FIG. 13 is a diagram illustrating an example of an evaluation operation of the information processing apparatus according to the seventh example embodiment.

As illustrated in FIG. 13, in the information processing apparatus 10 according to the seventh example embodiment, a plurality of pieces of guide information with different parameters are generated. Specifically, the guide information illustrated in FIG. 13 is intended to guide the target to move forward, but the parameter (i.e., an expression about a degree of movement) varies, such as "Please move forward by 30cm," "Please move forward by 50cm," "Please move forward by 1m," "Please move a step forward," and "Please move forward a little."

The guide evaluation unit 130 according to the seventh example embodiment evaluates the plurality of pieces of guide information with different parameters, separately, for each parameter. In the example illustrated in FIG. 13, the guide evaluation unit 130 calculates the evaluation score separately for each of the plurality of pieces of guide information. Specifically, the evaluation score for "Please move forward by 30cm" is "80", the evaluation score for "Please move forward by 50cm" is "90", the evaluation score for "Please move forward by 1m" is "60", the evaluation score for "Please move a step forward" is "70", and the evaluation score for "Please move forward a little " is "50". Therefore, in this case, it is seen that "Please move forward by 50cm" is highly evaluated among the plurality of pieces of guide information.

### (Technical Effect)

Next, a technical effect obtained by the information processing apparatus 10 according to the seventh example embodiment will be described.

As described in FIG. 13, in the information processing apparatus 10 according to the seventh example embodiment, the plurality of pieces of guide information with different parameters are generated, and the plurality of pieces of guide information are separately evaluated for each parameter. In this way, it is possible to properly evaluate the guide information in view of an influence/effect caused by the difference in the parameter. More specifically, even the same type of guide information may be evaluated in more detail, by raising the evaluation of the guide information including an appropriate parameter and lowering the evaluation of the guide information including an inappropriate parameter.

### <Eighth Example Embodiment>

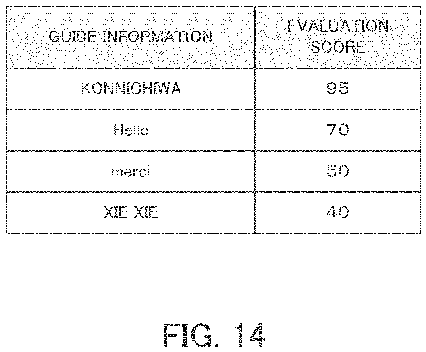

The information processing apparatus 10 according to an eighth example embodiment will be described with reference to FIG. 14. The eighth example embodiment is partially different from the first to seventh example embodiments only in the operation, and may be the same as the first to seventh example embodiments in the other parts. For this reason, a part that is different from each of the example embodiments described above will be described in detail below, and a description of the other overlapping parts will be omitted as appropriate.

### (Method of Evaluating Guide Information in Different Languages)

First, with reference to FIG. 14, the guide information generated by the information processing apparatus 10 according to the eighth example embodiment and an evaluation method thereof will be described. FIG. 14 is a diagram illustrating an example of the evaluation operation of the information processing apparatus according to the eighth example embodiment.

As illustrated in FIG. 14, in the information processing apparatus 10 according to the eighth example embodiment, a plurality of pieces of guide information in different languages are generated. Specifically, the plurality of pieces of guide information illustrated in FIG. 14 are displayed in Japanese, English, French, and Chinese, respectively. A greeting sentence is used as an example of the guide information here, but a message displayed immediately before or after the specific guide information (i.e., information for guiding the target) may be displayed in different languages. The specific guide information (e.g., the guide information for encouraging the target to move forward as illustrated in FIG. 13), however, may be displayed in different languages.

The guide evaluation unit 130 according to the eighth example embodiment evaluates the plurality of pieces of guide information in different languages, separately, for each language. In the example illustrated in FIG. 14, the guide evaluation unit 130 calculates the evaluation score separately for each of the plurality of pieces of guide information. Specifically, the evaluation score for "Konnichiwa" is "95", the evaluation score for "Hello" is "70", the evaluation score for "merci" is "50", and the evaluation score for "Xie Xie" is "40". Therefore, in this case, it is seen that "Konnichiwa" is highly evaluated among the plurality of pieces of guide information. Consequently, it is possible to estimate that a native language of the target is Japanese.

In this case, the subsequent guide information may be displayed in Japanese with the highest evaluation score. Alternatively, the subsequent guide information may be displayed in Japanese with the highest evaluation score and in English with the second highest evaluation score.

### (Technical Effect)

Next, a technical effect obtained by the information processing apparatus 10 according to the eighth example embodiment will be described.

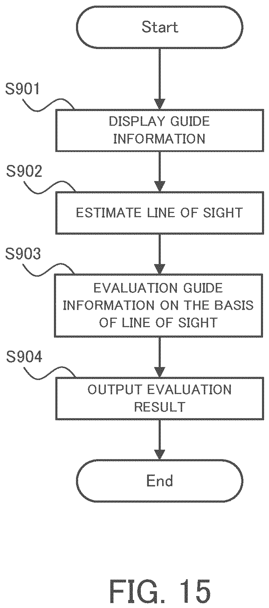

As described in FIG. 15, in the information processing apparatus 10 according to the eighth example embodiment, the plurality of pieces of guide information in different languages are generated, and the plurality of pieces of guide information are separately evaluated for each language. In this way, it is possible to evaluate the guidance in view of whether the language is suitable for target. More specifically, it is possible to evaluate the guide information in view of whether the target is able to understand the guide information (e.g., whether the native language of the target is included).

### <Ninth Example Embodiment>

The information processing apparatus 10 according to a ninth example embodiment will be described with reference to FIG. 15. The ninth example embodiment describes a more specific example of the eighth example embodiment (i.e., the method of evaluating the guide information in different languages), and may be the same as the first to eighth example embodiments in the other parts. For this reason, a part that is different from each of the example embodiments described above will be described in detail below, and a description of the other overlapping parts will be omitted as appropriate.

### (Evaluation Using Line of Sight)

First, with reference to FIG. 15, the evaluation method by the information processing apparatus 10 according to the ninth example embodiment will be described. FIG. 15 is a flowchart illustrating a flow of the evaluation operation performed by the information processing apparatus according to the ninth example embodiment.

As illustrated in FIG. 15, when the evaluation operation by the information processing apparatus 10 according to the ninth example embodiment is started, first, the guide generation unit 110 generates the plurality of pieces of guide information in different languages, and the guide output unit 120 outputs the plurality of pieces of guide information generated, to be displayed on a monitor or the like (step S901). The plurality of pieces of guide information may be displayed collectively on one screen, or may be displayed on different screens. Alternatively, the plurality of pieces of guide information may be displayed sequentially and separately on one screen.

Subsequently, the guide evaluation unit 130 estimates a gaze direction of the target when the guide information is displayed (step S902). A method of estimating the gaze direction may employ existing techniques/technologies as appropriate, and therefore, a detailed description thereof will be omitted here.

Subsequently, the guide evaluation unit 130 evaluates each of the plurality of pieces of guide information on the basis of the estimated gaze directions (step S903). For example, the guide evaluation unit 130 may collectively display the plurality of pieces of guide information, and may highly evaluate the guide information displayed at a position where a line of sight of the target is stopped (i.e., the guide information gazed by the target). Alternatively, the guide evaluation unit 130 may sequentially display the plurality of pieces of guide information, and may highly evaluate the guide information displayed when the line of sight of the target moves (i.e., the guide information read by the target).

Thereafter, the guide evaluation unit 130 outputs the evaluation result (step S904). The evaluation result may be outputted to the guide generation unit 110, and may be used for the subsequent generation of the guide information, for example. For example, as described in the fifth example embodiment (see FIG. 10 and FIG. 11), the learning may be performed on the guide generation unit 110 by using the evaluation result.

### (Technical Effect)

Next, a technical effect obtained by the information processing apparatus 10 according to the ninth example embodiment will be described.

As described in FIG. 15, in the information processing apparatus 10 according to the ninth example embodiment, the guide information is evaluated on the basis of the line of sight of the target when the guide information is displayed. In this way, since it is considered whether the target is actually looking at (or reading) the guide information, it is possible to evaluate the guide information, more properly.

### <Tenth Example Embodiment>

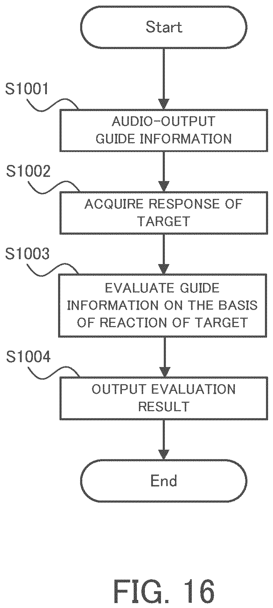

The information processing apparatus 10 according to a tenth example embodiment will be described with reference to FIG. 16. The tenth example embodiment describes a more specific example of the eighth example embodiment (i.e., the method of evaluating the guide information in different languages) as in the ninth example embodiment, and may be the same as the first to ninth example embodiments in the other parts. For this reason, a part that is different from each of the example embodiments described above will be described in detail below, and a description of the other overlapping parts will be omitted as appropriate.

### (Evaluation Using Reaction to Audio)

First, with reference to FIG. 16, the evaluation method by the information processing apparatus 10 according to the tenth example embodiment will be described. FIG. 16 is a flowchart illustrating a flow of the evaluation operation performed by the information processing apparatus according to the tenth example embodiment.

As illustrated in FIG. 16, when the evaluation operation by the information processing apparatus 10 according to the tenth example embodiment is started, first, the guide generation unit 110 generates the plurality of pieces of guide information in different language, and the guide output unit 120 outputs the plurality of pieces of guide information generated, and audio-outputs them by a speaker or the like (step S1001). The plurality of pieces of guide information are typically sequentially outputted, but may be outputted simultaneously from a plurality of speakers disposed in different orientations when viewed from the target, for example.

Subsequently, the guide evaluation unit 130 acquires a reaction of the target (i.e., a reaction to an audio) when the guide information is audio-outputted (step S1002). The reaction of the target may be acquired by detecting a movement of the target, for example. Specifically, an action of the target when listening to audio (e.g., an action of listening to a speaker or an action of nodding to audio) may be detected. In this case, the reaction of the target may be acquired in view of a delay in response to audio.

Subsequently, the guide evaluation unit 130 evaluates each of the plurality of pieces of guide information on the basis of the acquired reaction of the target (step S903). For example, the guide evaluation unit 130 may highly evaluate the guide information greatly reacted by the target in an audio-output period. Alternatively, the guide evaluation unit 130 may highly evaluate the guide information to which the target, who has been reacting, stops the reaction (starts to focus on listening) in the audio-output period.

Thereafter, the guide evaluation unit 130 outputs the evaluation result (step S1004). The evaluation result may be outputted to the guide generation unit 110, and may be used for the subsequent generation of the guide information, for example. For example, as described in the fifth example embodiment (see FIG. 10 and FIG. 11), the learning may be performed on the guide generation unit 110 by using the evaluation result.

### (Technical Effect)

Next, a technical effect obtained by the information processing apparatus 10 according to the tenth example embodiment will be described.

As described in FIG. 16, in the information processing apparatus 10 according to the tenth example embodiment, the guide information is evaluated on the basis of the reaction of the target when the guide information is audio-outputted. In this way, since it is considered whether the target is actually listening to the guide information, it is possible to evaluate the guide information, more properly.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal.

### <Supplementary Notes>

The example embodiments described above may be further described as, but not limited to, the following Supplementary Notes below.

### (Supplementary Note 1)

An information processing apparatus according to Supplementary Note 1 is an information processing apparatus including: a guide generation unit that generates guide information about capturing a target image on the basis of the target image; a guide output unit that outputs the guide information; and a guide evaluation unit that evaluates the guide information on the basis of the target image captured before and after an output of the guide information.

### (Supplementary Note 2)

An information processing apparatus according to Supplementary Note 2 is the information processing apparatus according to Supplementary Note 1, further including: a score calculation unit that calculates a quality score from the target image; and a degradation factor estimation unit that estimates a degradation factor of quality from the target image, wherein the guide generation unit generates the guide information on the basis of at least one of the quality score and the degradation factor.

### (Supplementary Note 3)

An information processing apparatus according to Supplementary Note 3 is the information processing apparatus according to Supplementary Note 2, wherein the guide evaluation unit evaluates the guide information on the basis of a transition of at least one of the quality score and the degradation factor before and after the output of the guide information.

### (Supplementary Note 4)

An information processing apparatus according to Supplementary Note 4 is the information processing apparatus according to Supplementary Note 3, wherein the guide evaluation unit evaluates the guide information on the basis of at least one of information about an imaging environment, an imaging date and time, an imaging target, and an imaging place of the target image, in addition to the transition of at least one of the quality score and the degradation factor.

### (Supplementary Note 5)

An information processing apparatus according to Supplementary Note 5 is the information processing apparatus according to any one of Supplementary Notes 1 to 4, further comprising a learning unit that performs learning on the guide generation unit on the basis of an evaluation result by the guide evaluation unit, wherein the guide generation unit generates the guide information by using a learning result by the learning unit.

### (Supplementary Note 6)

An information processing apparatus according to Supplementary Note 6 is the information processing apparatus according to Supplementary Note 5, wherein the learning unit performs the learning on the guide generation unit so as to increase a generation frequency of the guide information with the good evaluation result, and the guide generation unit generates the guide information with a good evaluation result at a higher frequency than that of the guide information with a bad evaluation result, by using the learning result by the learning unit.

### (Supplementary Note 7)

An information processing apparatus according to Supplementary Note 7 is the information processing apparatus according to any one of Supplementary Notes 1 to 6, wherein the guide generation unit generates a plurality of pieces of first guide information including different parameters as the guide information, and the guide evaluation unit evaluates the plurality of pieces of first guide information for each parameter.

### (Supplementary Note 8)

An information processing apparatus according to Supplementary Note 8 is the information processing apparatus according to any one of Supplementary Notes 1 to 7, wherein the guide generation unit generates a plurality of pieces of second guide information including different languages as the guide information, and the guide evaluation unit evaluates the plurality of pieces of second guide information for each language.

### (Supplementary Note 9)

An information processing apparatus according to Supplementary Note 9 is the information processing apparatus according to Supplementary Note 8, wherein the guide output unit outputs the second guide information so as to be displayed to a target, and the guide evaluation unit evaluates the second guide information on the basis of a line of sight of the target when the second guide information is displayed.

### (Supplementary Note 10)

An information processing apparatus according to Supplementary Note 10 is the information processing apparatus according to Supplementary Note 8 or 9, wherein the guide output unit audio-outputs the second guide information to a target, and the guide evaluation unit evaluates the second guide information on the basis of a reaction of the target to an audio of the second guide information.

### (Supplementary Note 11)

An information processing method according to Supplementary Note 11 is an information processing method that is executed by at least one computer, the information processing method including: generating guide information about capturing a target image on the basis of the target image; outputting the guide information; and evaluating the guide information on the basis of the target image captured before and after an output of the guide information.

### (Supplementary Note 12)

A recording medium according to Supplementary Note 12 is a recording medium on which a computer program that allows at least one computer to execute an information processing method is recorded, the information processing method including: generating guide information about capturing a target image on the basis of the target image; outputting the guide information; and evaluating the guide information on the basis of the target image captured before and after an output of the guide information.

### (Supplementary Note 13)

A computer program according to Supplementary Note 13 is a computer program that allows at least one computer to execute an information processing method, the information processing method including: generating guide information about capturing a target image on the basis of the target image; outputting the guide information; and evaluating the guide information on the basis of the target image captured before and after an output of the guide information.

### (Supplementary Note 14)

An information processing system according to Supplementary Note 14 is an information processing system including: a guide generation unit that generates guide information about capturing a target image on the basis of the target image; a guide output unit that outputs the guide information; and a guide evaluation unit that evaluates the guide information on the basis of the target image captured before and after an output of the guide information.

This disclosure is allowed to be changed, if desired, without departing from the essence or spirit of this disclosure which can be read from the claims and the entire specification. An information processing apparatus, an information processing method, and a recording medium with such changes are also intended to be within the technical scope of this disclosure.

### Description of Reference Codes

10 Information processing apparatus
11 Processor
16 Output apparatus
110 Guide generation unit
120 Guide output unit
130 Guide evaluation unit
140 Quality score calculation unit
150 Degradation factor estimation unit
160 Imaging information acquisition unit
170 Learning unit

## Claims

1. An information processing apparatus comprising:
a guide generation unit that generates guide information about capturing a target image on the basis of the target image;
a guide output unit that outputs the guide information; and
a guide evaluation unit that evaluates the guide information on the basis of the target image captured before and after an output of the guide information.

2. The information processing apparatus according to claim 1, further comprising:
a score calculation unit that calculates a quality score from the target image; and
a degradation factor estimation unit that estimates a degradation factor of quality from the target image, wherein
the guide generation unit generates the guide information on the basis of at least one of the quality score and the degradation factor.

3. The information processing apparatus according to claim 2, wherein the guide evaluation unit evaluates the guide information on the basis of a transition of at least one of the quality score and the degradation factor before and after the output of the guide information.

4. The information processing apparatus according to claim 3, wherein the guide evaluation unit evaluates the guide information on the basis of at least one of information about an imaging environment, an imaging date and time, an imaging target, and an imaging place of the target image, in addition to the transition of at least one of the quality score and the degradation factor.

5. The information processing apparatus according to any one of claims 1 to 4, further comprising a learning unit that performs learning on the guide generation unit on the basis of an evaluation result by the guide evaluation unit, wherein
the guide generation unit generates the guide information by using a learning result by the learning unit.

6. The information processing apparatus according to claim 5, wherein
the learning unit performs the learning on the guide generation unit so as to increase a generation frequency of the guide information with the good evaluation result, and
the guide generation unit generates the guide information with a good evaluation result at a higher frequency than that of the guide information with a bad evaluation result, by using the learning result by the learning unit.

7. The information processing apparatus according to any one of claims 1 to 6, wherein
the guide generation unit generates a plurality of pieces of first guide information including different parameters as the guide information, and
the guide evaluation unit evaluates the plurality of pieces of first guide information for each parameter.

8. The information processing apparatus according to any one of claims 1 to 7, wherein
the guide generation unit generates a plurality of pieces of second guide information including different languages as the guide information, and
the guide evaluation unit evaluates the plurality of pieces of second guide information for each language.

9. The information processing apparatus according to claim 8, wherein
the guide output unit outputs the second guide information so as to be displayed to a target, and
the guide evaluation unit evaluates the second guide information on the basis of a line of sight of the target when the second guide information is displayed.

10. The information processing apparatus according to claim 8 or 9, wherein
the guide output unit audio-outputs the second guide information to a target, and
the guide evaluation unit evaluates the second guide information on the basis of a reaction of the target to an audio of the second guide information.

11. An information processing method that is executed by at least one computer, the information processing method comprising:
generating guide information about capturing a target image on the basis of the target image;
outputting the guide information; and
evaluating the guide information on the basis of the target image captured before and after an output of the guide information.

12. A recording medium on which a computer program that allows at least one computer to execute an information processing method is recorded, the information processing method including:
generating guide information about capturing a target image on the basis of the target image;
outputting the guide information; and
evaluating the guide information on the basis of the target image captured before and after an output of the guide information.
